(19) Europäisches Patentamt
European Patent Office
Office européen des brevets

(11) Veröffentlichungsnummer : **0 158 161**
**B1**

(12) **EUROPÄISCHE PATENTSCHRIFT**

(45) Veröffentlichungstag der Patentschrift : **21.12.88**

(21) Anmeldenummer : **85103076.7**

(22) Anmeldetag : **16.03.85**

(51) Int. Cl.⁴ : **C 08 F220/28**, C 08 F246/00, C 09 D 3/80

(54) **Hydroxylgruppenhaltiges Acrylatcopolymerisat, Verfahren zu seiner Herstellung und Überzugsmittel auf Basis des Acrylatcopolymerisats.**

(30) Priorität : **04.04.84 DE 3412534**

(43) Veröffentlichungstag der Anmeldung : **16.10.85 Patentblatt 85/42**

(45) Bekanntmachung des Hinweises auf die Patenterteilung : **21.12.88 Patentblatt 88/51**

(84) Benannte Vertragsstaaten : **AT BE CH DE FR GB IT LI NL SE**

(56) Entgegenhaltungen :
**EP-A- 0 028 118**
**EP-A- 0 103 199**
**DE-A- 2 120 137**

(73) Patentinhaber : **BASF Lacke + Farben Aktiengesellschaft**
**Max-Winkelmann-Strasse 80**
**D-4400 Münster (DE)**

(72) Erfinder : **Jung, Werner, Dr.**
**Uhrwerkerstrasse 65**
**D-4715 Ascheberg (DE)**
Erfinder : **Klesse, Christoph, Dr.**
**Eschkopfstrasse 4**
**D-6703 Limburgerhof (DE)**
Erfinder : **Sievers, Axel, Dr.**
**Tulpenweg 55-57**
**D-4400 Münster (DE)**

**EP 0 158 161 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Die Erfindung betrifft ein hydroxylgruppenhaltiges vorvernetztes Acrylatcopolymerisat, entstanden durch Copolymerisation von Acrylatmonomeren mit mindestens 2 olefinisch ungesättigten Doppelbindungen, hydroxylgruppenhaltigen Monomeren und weiteren olefinisch ungesättigten Monomeren.

Aus der EP-A-103 199 ist ein Acrylatcopolymerisat der eingangs genannten Art bekannt. Das hydroxylgruppenhaltige Acrylatcopolymerisat enthält 10 bis 95 Gew.-% tert.-Butylacrylat, 0,1 bis 3 Gew.-% polyfunktionelle Acrylatmonomere, 1 bis 30 Gew.-% hydroxylgruppenhaltige Monomere und bis zu 80 Gew.-% weiterer Monomerer einpolymerisiert. Die Copolymerisation wird bei einem Festkörperfehalt von ca. 75 Gew.-% durchgeführt. Der Monomerenumsatz bei der Copolymerisation ist relativ schlecht, er beträgt laut Beispielen der EP-A-103 199 zwischen 92 und 95 %. Die OH-haltigen Copolymerisate werden mit veretherten Aminoformaldehydharzen vernetzt. Aus der Beschreibung der EP-A-103 199 geht hervor, daß die Kombination von tert.-Butylacrylat mit den polyfunktionellen Acrylatmonomeren zu einer verbesserten Feuchtigkeitsbeständigkeit führt.

Aus der EP-A-64 338 ist ein säurehärtbares Überzugsmittel auf der Basis eines Acrylatcopolymerisats und eines Melaminformaldehydharzes bekannt.

Es ist Aufgabe der vorliegenden Erfindung, ein vernetzbares Acrylatcopolymerisat sowier Überzugsmittel auf Basis des vernetzbaren Acrylatcopolymerisats mit verbesserter Benzinfestigkeit und verbesserter Beständigkeit gegenüber langfristiger Belastung durch Wasser bzw. Wasserdampf zu schaffen.

Die Aufgabe wird durch ein hydroxylgruppenhaltiges Acrylatcopolymerisat der eingangs genannten Art gelöst, das dadurch gekennzeichnet ist, daß zu seiner Herstellung

$a_1$) 10 bis 60 Gew.-% hydroxylgruppenhaltige Ester der Acrylsäure und/oder Methacrylsäure mit 2 bis 14 Kohlenstoffatomen im Alkylrest,

$a_2$) 5 bis 25 Gew.-% Monomere mit mindestens 2 polymerisierbaren, olefinisch ungesättigten Doppelbindungen und

$a_3$) 15 bis 82 Gew.-% weitere polymerisierbare Monomere mit einer olefinisch ungesättigten Doppelbindung,

wobei die Summe der Komponenten $a_1$), $a_2$) und $a_3$) 100 Gew.-% beträgt, in einem organischen Lösungsmittel bei 80 bis 130 °C, vorzugsweise bei 90 bis 120 °C, unter Verwendung von mindestens 0,5 Gew.-%, vorzugsweise mindestens 2,5 Gew.-%, bezogen auf das Gesamtgewicht der Monomeren, eines Polymerisationsreglers und unter Verwendung von Polymerisationsinitiatoren copolymerisiert werden, wobei die Polymerisation zur Herstellung des Acrylatcopolymerisats so durchgeführt wird, daß eine klare transparente nicht gelierte Lösung des Polymerisats mit einem Festkörpergehalt von 40 bis 65 Gew.-% resultiert.

Vorzugsweise wird das Acrylatcopolymerisat erhalten aus 15 bis 60 Gew.-% $a_1$) und 5 bis 20 Gew.-% $a_2$), wobei die Summe von $a_1$), $a_2$) und $a_3$) 100 Gew.-% beträgt.

Als Komponente $a_2$) können vorteilhaft Verbindungen der allgemeinen Formel

$$CH_2 = \overset{R}{\overset{|}{C}} - \overset{O}{\overset{\|}{C}} - X - (CH_2)_n - X - \overset{O}{\overset{\|}{C}} - \overset{R}{\overset{|}{C}} = CH_2$$

mit

R = H oder $CH_3$
X = O, N, S
n = 2 bis 8

verwendet werden.

Beispiele für derartige Verbindungen sind Hexandioldiacrylat, Hexandioldimethacrylat, Glykoldiacrylat, Glykoldimethacrylat, Butandioldiacrylat, Butandioldimethacrylat und ähnliche Verbindungen.

Weiterhin kann die Komponente $a_2$) vorteilhaft ein Umsetzungsprodukt aus einer Carbonsäure mit einer polymerisierbaren, olefinisch ungesättigten Doppelbindung und Glycidylacrylat und/oder Glycidylmethacrylat oder eine mit einem ungesättigten Alkohol veresterte Polycarbonsäure oder ungesättigte Monocarbonsäure sein.

Ferner kann vorteilhaft als Komponente $a_2$) ein Umsetzungsprodukt eines Polyisocyanats und eines ungesättigten Alkohols oder Amins verwendet werden. Als Beispiel hierfür sei das Reaktionsprodukt aus einem Mol Hexamethylendiisocyanat und 2 Mol Allylalkohol genannt.

Eine weitere vorteilhafte Komponente $a_2$) ist ein Diester von Polyethylenglykol und/oder Polypropylenglykol mit einem mittleren Molekulargewicht von weniger als 1500, vorzugsweise von weniger als 1000, und Acrylsäure und/oder Methacrylsäure. Erfindungsgemäß können als Komponente $a_2$) auch Acrylate mit mehr als 2 ethylenisch ungesättigten Doppelbindungen eingesetzt werden, wie beispielsweise Trimethylolpropantriacrylat oder Trimethylolpropantrimethacrylat. Selbstverständlich können auch Kombinationen dieser mehrfach ungesättigten Monomeren verwendet werden.

Als Komponente $a_1$) kommen vor allem Hydroxyalkylester der Acrylsäure und/oder Methacrylsäure

mit einer primären Hydroxylgruppe in Betracht, z. B. Hydroxyethylacrylat, Hydroxypropylacrylat, Hydroxybutyl- acrylat, Hydroxyamylacrylat, Hydroxyhexylacrylat, Hydroxyoctylacrylat und die entsprechenden Methacrylate.

Vorteilhaft kann die Komponente $a_1$) zumindest teilweise ein Umsetzungsprodukt aus einem Mol Hydroxyethylacrylat und/oder Hydroxyethylmethacrylat und durchschnittlich 2 Mol ε-Caprolacton sein.

Weiterhin kann die Komponente $a_1$) vorteilhaft bis zu 75 Gew.-%, besonders bevorzugt bis zu 50 Gew.-%, bezogen auf die Gesamtmenge von $a_1$), ein hydroxylgruppenhaltiger Ester der Acrylsäure und/oder Methacrylsäure mit einer sekundären Hydroxylgruppe, insbesondere ein Umsetzungsprodukt aus Acrylsäure und/oder Methacrylsäure und dem Glycidylester einer Carbonsäure mit einem tertiären α-Kohlenstoffatom, sein. Als Beispiele seien 2-Hydroxypropylacrylat, 2-Hydroxybutylacrylat, 3-Hydroxybutylacrylat und die entsprechenden Methacrylate genannt.

Die Auswahl der weiteren polymerisierbaren Monomeren der Komponente $a_3$) ist nicht besonders kristisch. Sie können ausgewählt sein aus der Gruppe Styrol, Vinyltoluol, Acrylsäure, Methacrylsäure, Alkylester der Acrylsäure und Methacrylsäure, Alkoxyethylacrylate und Aryloxiethylacrylate und die entsprechenden Methacrylate sowie Ester der Malein- und Fumarsäure. Beispiele hierfür sind Methylacrylat, Ethylacrylat, Propylacrylat, Butylacrylat, Isopropylacrylat, Isobutylacrylat, Pentylacrylat, Isoamylacrylat, Hexylacrylat, 2-Ethylhexylacrylat, Octylacrylat, 3,5,5-Trimethylhexylacrylat, Decylacrylat, Dodecylacrylat, Hexadecylacrylat, Octadecylacrylat, Octadecenylacrylat, Pentylmethacrylat, Isoamylmethacrylat, Hexylmethacrylat, 2-Ethylbutylmethacrylat, Octylmethacrylat, 3,5,5-Trimethylhexylmethacrylat, Decylmethacrylat, Dodecylmethacrylat, Hexadecylmethacrylat, Octadecylmethacrylat, Alkoxyethylacrylate oder -methacrylate, wie Butoxyethylacrylat oder Butoxyethylmethacrylat, Methylmethacrylat, Ethylmethacrylat, Propylmethacrylat, Isopropylmethacrylat, Butylmethacrylat, Cyclohexylacrylat, Cyclohexylmethacrylat, Acrylnitril, Methacrylnitril, Vinylacetat, Vinylchlorid und Phenoxyethylacrylat. Weitere Monomere können eingesetzt werden, sofern sie nicht zu unerwünschten Eigenschaften des Copolymerisats führen.

Die Erfindung betrifft auch ein Verfahren zur Herstellung der beschriebenen Acrylatcopolymerisate, das dadurch gekennzeichnet ist, daß zur Herstellung der Acrylatcopolymerisate

$a_1$) 10 bis 60 Gew.-% hydroxylgruppenhaltige Ester der Acrylsäure und/oder Methacrylsäure mit 2 bis 14 Kohlenstoffatomen im Alkylrest,

$a_2$) 5 bis 25 Gew.-% Monomere mit mindestens 2 polymerisierbaren, olefinisch ungesättigten Doppelbindungen und

$a_3$) 15 bis 82 Gew.-% weitere polymerisierbare Monomere mit einer olefinisch ungesättigten Doppelbindung

in einem organischen Lösungsmittel bei 80 bis 130 °C, vorzugsweise bei 90 bis 120 °C, unter Zusatz von Polymerisationsinitiatoren und mindestestens 0,5 Gew.-%, vorzugsweise mindestens 2,5 Gew.-%, bezogen auf das Gesamtgewicht der Monomeren, Polymerisationsreglern zu einem vorvernetzten, nicht gelierten Produkt in der Weise copolymerisiert werden, daß eine klare transparente nicht gelierte Lösung des Polymerisats mit einem Festkörpergehalt von 40 bis 60 Gew.-% resultiert, wobei die Summe der Komponenten $a_1$), $a_2$) und $a_3$) 100 Gew.-% beträgt.

Es ist darauf zu achten, daß ein vorvernetztes, aber nicht geliertes Copolymerisat erhalten wird. Durch geeignete Polymerisationsbedingungen läßt sich überraschenderweise eine klare, transparente, nicht gelierte Lösung eines verzweigten Copolymerisats herstellen. Durch die Verwendung von Monomeren mit mindestens 2 ethylenisch ungesättigten Gruppen wird eine Vorvernetzung der Copolymerisatmoleküle hervorgerufen, die aufgrund der erfindungsgemäßen speziellen Reaktionsbedingungen trotzdem nicht zu gelierten Produkten führt. Diese speziellen Reaktionsbedingungen sind dadurch gekennzeichnet, daß man die Polymerisation bei Temperaturen von 80 bis 130 °C, vorzugsweise 90 bis 120 °C, bei relativ niedrigem Polymerisationsfestkörper von etwa 50 Gew.-% durchführt. Weiterhin ist es notwendig, geeignete Initiatoren und, je nach Anteil an difunktionellem Monomer, mindestens 0,5, vorzugsweise jedoch mindestens 2,5 gew.-% Polymerisationsregler (Kettenabbrecher), wie z. B. Mercaptoverbindungen, zu verwenden. Die Auswahl des Initiators richtet sich nach dem Anteil der eingesetzten difunktionellen Monomeren. Bei niedrigem Anteil kann man die für solche Temperaturen üblichen Initiatoren, wie z. B. Peroxyester, verwenden. Bei höherem Anteil an difunktionellem Monomer werden vorzugsweise Initiatoren, wie z. B. Azoverbindungen, eingesetzt. Nach der Polymerisation wird die Polymerisatlösung durch Abdestillieren von Lösungsmittel auf den gewünschten Festkörpergehalt konzentriert, vorzugsweise auf Festkörpergehalte von 60 Gew.-%. Die so erhaltenen klaren Copolymerisatlösungen besitzen, auf einen Festkörpergehalt von 50 Gew.-% eingestellt, eine Viskosität von 0,4 bis 10 dPas.

Als Polymerisationsregler werden Mercaptogruppen enthaltende Verbindungen, vorzugsweise Mercaptoethanol, verwendet.

Überraschenderweise zeigen Messungen der Acrylatcopolymerisatlösungen mittels der Photonenkorrelationsspektroskopie keinen Gehalt an Mikrogelen an.

Die Erfindung betrifft auch ein Bindemittel, organische Lösungsmittel, gegebenenfalls Pigmente, Füllstoffe und übliche Hilfsstoffe und Additive enthaltendes sowie gegebenenfalls durch einen Katalysator härtbares Überzugsmittel, welches als Bindemittel das erfindungsgemäße Acrylatcopolymerisat und ein zur Vernetzung desselben geeignetes Bindemittel enthält.

Die Erfindung betrifft ein Überzugsmittel, das dadurch gekennzeichnet ist, daß es durch Säure härtbar ist und als Bindemittel

A) 55 bis 90 Gew.-%, vorzugsweise 70 bis 80 Gew.-%, des erfindungsgemäßen Acrylatcopolymerisats und

B) 10 bis 45 Gew.-%, vorzugsweise 20 bis 30 Gew.-%, eines Melaminformaldehydharzes mit einem mittleren Molekulargewicht von 250 bis 1000 und einem Methylolierungsgrad von mindestens 0,65, bevorzugt 0,9 bis 1, das mit Monoalkoholen mit 1 bis 4 Kohlenstoffatomen und/oder Monoethern von Diolen mit insgesamt 2 bis 7 Kohlenstoffatomen in einem Umfang von mindestens 80 Mol-%, bevorzugt 90 bis 100 Mol-%, bezogen auf die maximal mögliche Veretherung, verethert ist, enthält,

wobei die Summe der Bindemittel A) und B) 100 Gew.-% beträgt.

Vorzugsweise ist das Acrylatcopolymerisat A aus 25 bis 40 Gew.-% der Komponente $a_1$), wobei die Summe der Komponenten $a_1$), $a_2$) und $a_3$) 100 Gew.-% beträgt, hergestellt worden.

Das als Bindemittel B) verwendete Melaminformaldehydharz kann z. B. mit Methanol, Ethanol, Propanol und Butanol verethert sein. Gut geeignet ist das Hexakis-(methoxy) methylmelamin. Selbstverständlich kann die Komponente B) auch aus Harnstofformaldehyd- und Benzoguanaminformaldehydharzen bestehen.

Die erfindungsgemäßen vorstehend beschriebenen Überzugsmittel werden vor ihrer Verwendung mit einem Säurekatalysator vermischt, um die Härtungstemperatur herabzusetzen und die Härtung zu beschleunigen. Der Katalysator wird in einer Menge von 1 bis 5 Gew.-%, vorzugsweise 1,5 bis 3,5 Gew.-%, bezogen auf den Feststoffgehalt an Bindemitteln A) und B) eingesetzt. Besonders geeignet sind Sulfonsäureverbindungen, insbesondere p-Toluolsulfonsäure. Es können auch Mischungen von Katalysatoren eingesetzt werden.

Die Erfindung betrifft auch ein Verfahren zur Herstellung eines Überzugs, bei dem dem zuvor beschriebenen Überzugsmittel ein Säurekatalysator in einer Menge von 1 bis 5 Gew.-%, vorzugsweise 1,5 bis 3,5 Gew.-%, bezogen auf den Bindemittelfeskörpergehalt an A) und B) zugemischt wird, die erhaltene Mischung durch Spritzen, Fluten, Tauchen, Walzen, Rakeln oder Streichen auf ein Substrat in Form eines Films aufgebracht wird und der Film bei Temperaturen von 20 bis 80 °C zu einem fest haftenden Überzug gehärtet wird.

Zur Verlängerung der Topfzeit auf 6 bis 24 Stunden nach Zugabe des Katalysators enthält das Überzugsmittel vorteilhaft eine der Säuremenge äquivalente Menge einer stickstoffhaltigen Verbindung oder je nach gewünschten Verlängerung der Topfzeit einen Teil dieser Menge.

Eine Verlängerung der Topfzeit kann vorteilhaft auch durch Zusatz von 5 bis 35 Gew.-%, bezogen auf den Feststoffgehalt an Bindemittel, eines oder mehrerer Alkohole erreicht werden, wobei Ethanol, Butanol und deren Mischungen bevorzugt werden.

Die Erfindung betrifft auch ein Verfahren zur Herstellung eines durch Säure härtbaren Überzugsmittels, das dadurch gekennzeichnet ist, daß das hydroxylgruppenhaltige Acrylatcopolymerisat A) in einem Anteil von 55 bis 90 Gew.-%, vorzugsweise 70 bis 80 Gew.-%, mit 10 mit 45 Gew.-%, vorzugsweise 20 bis 30 Gew.-% der Komponente B) sowie mit organischen Lösungsmitteln, gegebenenfalls Pigmenten und üblichen Hilfsstoffen und Additiven durch Mischen und gegebenenfalls Dispergieren zu einer Überzugsmasse verarbeitet wird, wobei die Summe der Bindemittel A) und B) 100 Gew.-% beträgt.

Die Erfindung betrifft auch ein Überzugsmittel, das dadurch gekennzeichnet ist, daß es als wesentliche Bindemittel das erfindungsgemäße Acrylatcopolymerisat

A) und

B) ein oder mehrere verschiedene polyfunktionelle Isocyanate

enthält mit der Maßgabe, daß das Verhältnis der Isocyanatgruppen zu den Hydroxylgruppen im Bereich von 0,3 : 1 bis 3,5 : 1 liegt.

Beispiele für polyfunktionelle Isocyanate, die zur Vernetzung von Hydroxylgruppen enthaltenden Copolymeren verwendet werden können, sind 2,4-Toluylendiisocyanat, 2,6-Toluylendiisocyanat, 4,4'-Diphenylmethandiisocyanat, Hexamethylendiisocyanat, 3,5,5-Trimethyl-1-isocyanato-3-isocyanatomethylcyclohexan, m-Xylylendiisocyanat, p-Xylylendiisocyanat, Tetramethylendiisocyanat, Cyclohexan-1,4-Diisocyanat, 4,4'-Diisocyanatdiphenylether, 2,4,6-Triisocyanattoluol und 4,4',4''-Triisocyanattriphenylmethan. Die Polyisocyanate können zu Präpolymeren mit höherer Molmasse verknüpft sein. Zu nennen sind hierbei Addukte aus Toluylendiisocyanat und Trimethylolpropan, ein aus 3 Molekülen Hexamethylendiisocyanat gebildetes Biuret, sowie die Trimeren des Hexamethylendiisocyanats und des 3,5,5-Trimethyl-1-isocyanato-3-isocyanatomethylcyclohexans.

Bei Acrylatcopolymeren, die mit Isocyanatgruppen vernetz werden sollen, werden vorzugsweise 15 bis 40 Gew.-% der Komponente $a_1$), wobei die Summe der Komponente $a_1$), $a_2$) und $a_3$) 100 Gew.-% beträgt, verwendet.

Die Erfindung betrifft auch ein Verfahren zur Herstellung des zuvor beschriebenen Überzugmittels, das dadurch gekennzeichnet ist, daß das Acrylatcopolymerisat A) mit dem Vernetzungsmittel B) sowie mit organischen Lösungsmitteln, ggf. Pigmenten und üblichen Hilfsstoffen und Additiven durch Mischen und

ggf. durch Dispergieren zu einer Überzugsmasse verarbeitet wird mit der Maßgabe, daß das Verhältnis der Isocyanatgruppen zu den Hydroxylgruppen im Bereich von 0,3 : 1 bis 3,5 : 1 liegt.

Gemäß dem erfindungsgemäßen Verfahren kann ein oder können mehrere Katalysatoren in einer Menge von 0,01 bis 1 Gew.-%, bezogen auf den Festkörpergehalt der reagierenden Komponenten, verwendet werden. Bevorzugt werden als Katalysatoren Amine, beispielsweise Dimethylethanolamin, verwendet. Bei Zugabe von Katalysatoren kann die Härtungstemperatur herabgesetzt und die Härtung beschleunigt werden. Die erfindungsgemäße Isocyanathärtung kann bei Temperaturen ab Raumtemperatur durchgeführt werden. Bei sehr hohen Temperaturen erübrigt sich die Zugabe eines Katalysators. Die erfindungsgemäßen Überzugsmittel können bei niedrigen Temperaturen, z. B. bei Temperaturen von 20 bis 80 °C, gehärtet werden und werden daher insbesondere bei der Reparaturlackierung von Kraftfahrzeugen eingesetzt.

Die Erfindung betrifft auch ein Verfahren zur Herstellung eines Überzugs, bei dem das zuvor beschriebene Überzugsmittel, wobei dem Überzugsmittel gegebenenfalls ein Katalysator zugemischt werden kann, durch Spritzen, Fluten, Tauchen, Walzen, Rakeln oder Streichen auf ein Substrat in Form eines Films aufgebracht wird und der Film zu einem fest haftenden Überzug gehärtet wird.

Die gemäß der Erfindung erhaltenen Filme weisen, verglichen mit den Filmen gemäß der EP-A-103 199, eine verbesserte Lösemittelbeständigkeit und zumindest ebenso gute Wasser- bzw. Feuchtigkeitsbeständigkeiten auf. Auf die zwingende Mitverwendung von tert.-Butylacrylat kann bei der Copolymerisation zur Herstellung der erfindungsgemäßen Acrylatcopolymerisate verzichtet werden.

Überraschenderweise lassen sich die erfindungsgemäßen Acrylatcopolymerisate, die einen hohen Anteil an Verzweigungsmonomeren enthalten und somit relativ stark vorvernetzt sind, herstellen, ohne daß eine Gelierung der Produkte auftritt. Es wird bei einem relativ niedrigen Polymerisationsfestkörper polymerisiert. Gemäß der EP-A-103 199 wird die Polymerisation bei einem wesentlich höheren Festkörpergehalt durchgeführt.

Die Acrylatlösungen weisen unter vergleichbaren Bedingungen Viskositäten auf, die mit den aus der EP-A-103 199 bekannten Viskositäten vergleichbar sind. Dies ist umso überraschender, als normalerweise die Viskosität mit zunehmendem Vernetzungsgrad ansteigt.

Im folgenden wird die Erfindung an Hand von Ausführungsbeispielen näher erläutert.

A) Herstellung erfindungsgemäßer Copolymerisate (Bindemittel A)

In den folgenden beispielen beziehen sich, wenn nicht anders angegeben, alle Prozentangaben auf Gewichtsteile. Die Festkörperwerte wurden in einem Umluftofen bestimmt nach 1 Stunde bei 130 °C. Die Viskositäten wurden auf einem Kegel-Platte-Viskosimeter bestimmt.

1. Herstellung eines Acrylatharzes I

In einem 3 l-Kessel werden vorgelegt

360 Teile Butylacetat
180 Teile Methoxipropylacetat

Das Lösemittelgemisch wird auf 110 °C aufgeheizt. Innerhalb 3 h werden gleichmäßig zudosiert :

Lösung 1

300 Teile methylmethacrylat
250 Teile Styrol
150 Teile Hexandioldiacrylat
250 Teile Butandiolmonoacrylat
50 Teile n-Butylacrylat
45 Teile Mercaptoethanol

Lösung 2

350 Teile Butylacetat
30 Teile Azobisisobutyronitril
175 Teile Methoxipropylacetat

Danach wird weitere 3 h bei 110 °C nachpolymerisiert. Es wird ein Festkörper von 50,5 % erreicht. Unter Vakuum wurden bei 60-70 °C etwa 340 Teile Lösemittel abdestilliert. Die klare, farblose Acrylatharzlösung hat einen Festkörper von 60,6 %, eine Säurezahl von 0,1, eine OH-Zahl von 97 und bei 23 °C eine Viskosität von 2,0 dPas bei einem mit Ethylglykolacetat auf 50 % eingestellten Festkörpergehalt.

2. Herstellung des Acrylatharzes II

In einem 3 l-Kessel werden vorgelegt

360 Teile Butylacetat
180 Teile Methoxipropylacetat

Das Lösemittelgemisch wird auf 110 °C aufgeheizt. Innerhalb 3 h werden gleichmäßig zudosiert :

Lösung 1

300 Teile Methylmethacrylat
150 Teile Styrol
150 Teile Hexandioldiacrylat
400 Teile Hydroxiethylmethacrylat
45 Teile Mercaptoethanol

Lösung 2

350 Teile Butylacetat
30 Teile Azobisisobutyronitril
175 Teile Methoxipropylacetat

Danach wird weitere 3 h bei 110 °C nachpolymerisiert. Es wird ein Festkörper von 50,5 % erreicht. Unter Vakuum wurden bei 60-70 °C etwa 340 Teile Lösemittel abdestilliert. Die klare, farblose Acrylatharzlösung hat einen Festkörper von 61,4 %, eine Säurezahl von 0,4, eine OH-Zahl von 173 und bei 23 °C eine Viskosität von 6,6 dPas bei einem mit Ethylglykolacetat auf 50 % eingestellten Festkörpergehalt.

3. Herstellung des Acrylatharzes III

In einem 3l-Kessel werden vorgelegt

360 Teile Butylacetat
180 Teile Methoxipropylacetat.

Das Lösemittelgemisch wird auf 110 °C aufgeheizt. Innerhalb 3 h werden gleichmäßig zudosiert :

Lösung 1

300 Teile Methylmethacrylat
150 Teile Styrol
150 Teile Hexandioldiacrylat
150 Teile Hydroxiethylmethacrylat
250 Teile Butandiolmonoacrylat
45 Teile Mercaptoethanol

Lösung 2

350 Teile Butylacetat
30 Teile Azobisisobutyronitril
175 Teile Methoxipropylacetat

Danach wird weitere 3 h bei 110 °C nachpolymerisiert. Es wird ein Festkörper von 49,8 % erreicht. Unter Vakuum wurden bei 60-70 °C etwa 340 Teile Lösemittel abdestilliert. Die klare, farblose Acrylatharzlösung hat einen Festkörper von 60,9 %, eine Säurezahl von 0,3, eine OH-Zahl von 162 und bei 23 °C eine Viskosität von 3,8 dPas bei einem mit Ethylglykolacetat auf 50 % eingestellten Festkörpergehalt.

4. Herstellung des Acrylatharzes IV

In einem 3 l-Kessel werden vorgelegt

240 Teile Butylacetat
120 Teile Methoxipropylacetat
10 Teile tert.-Butylperoxy-2-ethylhexanoat

Das Lösemittelgemisch und ein Teil der benötigten Initiatormenge werden auf 110 °C aufgeheizt. Innerhalb 3 h werden gleichmäßig zudosiert :

Lösung 1

300 Teile Methylmethacrylat
250 Teile Styrol
75 Teile Hexandioldiacrylat
75 Teile Hydroxiethylmethacrylat
250 Teile Butandiolmonoacrylat
50 Teile n-Butylacrylat
35 Teile Mercaptoethanol

Innerhalb 3,5 h werden gleichmäßig zudosiert :

Lösung 2

240 Teile Butylacetat
35 Teile tert.-Butylperoxy-2-ethylhexanoat
120 Teile Methoxipropylacetat

Danach wird weitere 3 h bei 110 °C nachpolymerisiert. Die klare, farblose Acrylatharzlösung hat einen Festkörper von 61,5 %, eine Säurezahl von 4,1, eine OH-Zahl von 130 und bei 23 °C eine Viskosität von 4,8 dPas bei einem mit Ethylglykolacetat auf 50 % eingestellten Festkörpergehalt.

5. Herstellung des Acrylatharzes V

In einem 3 l-Kessel werden vorgelegt

360 Teile Butylacetat
180 Teile Methoxipropylacetat
10 Teile tert.-Butylperoxy-2-ethylhexanoat

Das Lösemittelgemisch wird auf 110 °C aufgeheizt. Innerhalb 3 h werden gleichmäßig zudosiert :

Lösung 1

300 Teile Methylmethacrylat
250 Teile Styrol
75 Teile Hexamethylenbismethacrylamid
75 Teile Hydroxiethylmethacrylat
250 Teile Butandiolmonoacrylat
50 Teile n-Butylacrylat
35 Teile Mercaptoethanol

Innerhalb 3,5 h werden gleichmäßig zudosiert :

Lösung 2

350 Teile Butylacetat
35 Teile tert.-Butylperoxy-2-ethylhexanoat
175 Teile Methoxipropylacetat

Danach wird weitere 3 h bei 110 °C nachpolymerisiert. Es wird ein Festkörper von 50,9 % erreicht. Unter Vakuum wurden bei 60-70 °C etwa 340 Teile Lösemittel abdestilliert. Die klare, farblose Acrylatharzlösung hat einen Festkörper von 61,5 %, eine Säurezahl von 3,1, eine OH-Zahl von 130 und bei 23 °C eine Viskosität von 3,6 dPas bei einem mit Ethylglykolacetat auf 50 % eingestellten Festkörpergehalt.

6. Herstellung eines Acrylatharzes VI

In einem 3 l-Kessel werden vorgelegt

361 Teile Butylacetat
181 Teile Ethylglykolacetat

Das Lösemittelgemisch wird auf 110 °C aufgeheizt. Innerhalb 3 h werden gleichmäßig zudosiert :

Lösung 1

300 Teile Methylmethacrylat
250 Teile Styrol
150 Teile Ethylenglykoldimethacrylat
250 Teile Butandiolmonocrylat
50 Teile n-Butylacrylat
45 Teile Mercaptoethanol

Lösung 2

350 Teile Butylacetat
30 Teile Azobisiobutyronitril
175 Teile Ethylglykolacetat

Danach wird weitere 3 h bei 110 °C nachpolymerisiert. Es wird ein Festkörper von 48,9 % erreicht. Unter Vakuum wurden bei 60-70 °C etwa 340 Teile Lösemittel abdestilliert. Die klare, farblose Acrylatharzlösung hat einen Festkörper von 59,1 %, eine Säurerahl von 1,6, eine OH-Zahl von 97 und bei 23 °C eine Viskosität von 6,5 dPas bei einem mit Ethylglykolacetat auf 50 % eingestellten Festkörpergehalt.

7. Herstellung des Acrylatharzes VII

In einem 3 l-Kessel werden vorgelegt

361 Teile Butylacetat
181 Teile Ethylglykolacetat

Das Lösemittelgemisch wird auf 110 °C aufgeheizt. Innerhalb 3 h werden gleichmäßig zudosiert :

Lösung 1

300 Teile Methylmethacrylat
150 Teile Styrol
150 Teile Hexandioldiacrylat
250 Teile Butandiolmonoacrylat
150 Teile 1 : 2-Umsetzungsprodukt aus 2-Hydroxiethylacrylat und Caprolacton, wie unten beschrieben
45 Teile Mercaptoethanol

Lösung 2

350 Teile Butylacetat
30 Teile Ethylglykolacetat
175 Teile Ethylglykolacetat

Danach wird weitere 3 h bei 110 °C nachpolymerisiert. Es wird ein Festkörper von 50,3 % erreicht. Unter Vakuum wurden bei 60-70 °C etwa 340 Teile Lösemittel abdestilliert. Die klare, farblose Acrylatharzlösung hat einen Festkörper von 60,1 %, eine Säurezahl von 0,7, eine OH-Zahl von 122 und bei 23 °C eine Viskosität von 7,4 dPas original und von 2,2 dPas bei einem mit Ethylglykolacetat auf 50 % eingestellten Festkörpergehalt.

Umsetzungsprodukt aus 2-Hydroxiethylacrylat und Caprolacton :

Es wurde ein handelsübliches Umsetzungsprodukt, hergestellt aus 1 Mol Hydroxiethylacrylat und durchschnittlich 2 Mol ε-Caprolacton eingesetzt.

B) Herstellung von Tönpasten für pigmentierte Decklacke.

Tönpaste weiß P1

| | |
|---|---|
| Acrylatharz I | 32,0 Teile |
| Titandioxid Rutil | 53,0 Teile |
| Antiabsetzmittel (Salz einer höhermolekularen Polycarbonsäure, 52 %ig in höhersiedenden Aromaten) | 1,0 Teile |

| | |
|---|---|
| Xylol | 4,3 Teile |
| Lösungsmittelgemisch (Xylol/Butylacetat 6 : 4) | 6,7 Teile |
| nachbehandelter Montmorrillonit (10 %ig in Solventnaphta/Propylencarbonat/Sojalecithin 85 : 4 : 1) | 2,0 Teile |
| pyrogenes Siliciumdioxid | 1,0 Teile |
| | 100,0 Teile |

Die Positionen werden nacheinander im Dissolver verrührt und anschließend 20 min auf einer handelsüblichen Laborsandmühle dispergiert (Feinheit von 10 µm).

Tönpaste gelb P2

| | |
|---|---|
| Acrylatharz I | 67,3 Teile |
| Anthrapyrimidingelb (CI Y 108, 68420) | 15,0 Teile |
| Lösungmittelgemisch (Xylol/Butylacetat 6 : 4) | 15,0 Teile |
| Triethylentetramin | 0,2 Teile |
| Xylol | 2,5 Teile |
| | 100,0 Teile |

Die Positionen werden nacheinander im Dissolver verrührt und anschließend 60 min auf einer handelsüblichen Laborsandmühle dispergiert (Feinheit 10 µm).

Tönpaste weiß mit Fremdbindemittel P3

| | |
|---|---|
| Lösungsmittelgemisch (Xylol/Butylacetat) | 5,4 Teile |
| handelsübliches OH-Mischpolymerisat, OH-Zahl 150 auf Festkörper, 60 %ig in Xylol/Ethylglykolacetat 2 : 1, Viskosität (50 %ig in Xylol) 450-750 mPas | 31,1 Teile |
| Antiabsetzmittel (Salz einer höhermolekularen Polycarbonsäure, 52 %ig in höhersiedenden Aromaten | 1,0 Teile |
| nachbehandelter Montmorrillonit (10 %ig in Solventnaphta/Propylencarbonat/Sojalecithin 85 : 4 : 1) | 2,0 Teile |
| pyrogenes Siliciumdioxid | 0,5 Teile |
| Titandioxid Rutil | 60,0 Teile |
| | 100,0 Teile |

Die Positionen werden nacheinander im Dissolver verrührt und anschließend 20 min auf einer handelsüblichen Laborsandmühle dispergiert (Feinheit 10 µm).

Tönpaste grün

| | |
|---|---|
| Acrylatharz I | 38,6 Teile |
| Titandioxid Rutil | 10,7 Teile |
| Gelbpigment (Y34, C.I. 77603) | 4,2 Teile |
| Gelbpigment (Y34, C.I. 77600) | 10,5 Teile |
| Grünpigment (G7, C.I. 74260) | 0,5 Teile |
| Butanol | 23,2 Teile |
| Tetralin | 4,6 Teile |
| Butylacetat | 7,7 Teile |
| | 100,00 Teile |

Die Positionen werden nacheinander im Dissolver verrührt und anschließend 20 min auf einer handelsüblichen Laborsandmühle dispergiert (Feinheit 10 µm).

Tönpaste rot

| | |
|---|---|
| Acrylatharz I | 46,3 Teile |
| Rotpigment (R 104, C.I. 77605) | 44,2 Teile |
| Netz- und Dispergieradditiv (Partialamid und Ammoniumsalz einer höhermolekularen, ungesättigten Polycarbonsäure, kombiniert mit einem organisch modifizierten Siloxancopolymer) | 1,0 Teile |
| Ethylglykolacetat | 8,5 Teile |
| | 100,00 Teile |

Die Positionen werden nacheinander im Dissolver verrührt und anschließend 20 min auf einer handelsüblichen Laborsandmühle dispergiert (Feinheit 10 µm).

C) Herstellung von Decklacken

In den folgenden Beispielen wird die Prüfung der Beschichtungen wie folgt durchgeführt :
Die Pendelhärte wird nach König bestimmt.
Beständigkeit gegen Superbenzin (FAM-Prüfkraftstoff DIN 51604) und Xylol :
Ein mit dem jeweiligen Lösungsmittel getränktes Zellstoffplättchen (Durchmesser ca. 35 mm) wird für die angegebene Zeit auf die Beschichtung (in Anfallviskosität auf Glas gerakelt) aufgelegt und abgedeckt. Der Film wird auf Erweichung und Markierung untersucht.
Schwitzwasserbeständigkeit :
Ein phosphatiertes Stahlblech mit üblichem Aufbau (kathodische Elektrotauchgrundierung, Epoxifüller, Decklack) wird für den angegebenen Zeitraum einer mit Feuchtigkeit gesättigten Atmosphäre bei 40 °C ausgesetzt.
Das Prüfblech wird nach einer Stunde Regenerationszeit auf Blasen und Glanzverlust geprüft.
Abklebetest :
Eine Stunde nach forcierter Trocknung der Beschichtung wird ein Streifen Kreppklebeband aufgeklebt und fest angedrückt und eine Stunde darauf belassen. Nach Abreißen des Klebebandes wird die Beschichtung auf Markierungen untersucht.

Beispiel 1

Rezeptur eines weißen Decklacks

| | |
|---|---|
| Acrylatharz I | 43,5 Teile |
| Tönpaste weiß P1 | 34,3 Teile |
| Hexakis-(methoximethyl)-melamin | 7,7 Teile |
| Xylol | 13,8 Teile |
| handelsübliches Siliconöl (5 %ig) | 1,0 Teile |
| Pyridinsalz der p-Toluolsulfonsäure (20 %ig) | 5,7 Teile |

Einstellverdünnung : Xylol (18 sec DIN 4)

Beispiel 2

Rezeptur eines gelben Decklacks

| | |
|---|---|
| Acrylatharz I | 69,1 Teile |
| Tönpaste gelb P2 | 14,0 Teile |
| Hexakis-(methoximethyl)-melamin | 12,0 Teile |
| Xylol | 4,9 Teile |
| handelsübliches Siliconöl (5 %ig) | 1,0 Teile |
| Pyridinsalz der p-Toluolsulfonsäure (20 %ig) | 8,5 Teile |

Einstellverdünnung : Xylol (18 sec DIN 4)

Bei forcierter Trocknung (30 min bei 60 °C wird folgendes Eigenschaftsniveau erreicht (wenn nicht anders angegeben, wurden die Belastungstests 1 Std. nach Entnahme aus dem Trocknungsofen durchgeführt).

| | Weißlack | Gelblack |
|---|---|---|
| Schichtstärke | 35 µm | 33 µm |
| Pendelhärte 1 Std. nach Trocknung | 55 sec | 50 sec |
| nach 48 Std. | 108 sec | 97 sec |
| Beständigkeit gegen | | |
| Superbenzin und Xylol (jeweils 5 min Belastungsdauer) | keine Markierung | nach 24 h keine Markierung |

(Fortsetzung)

| | Weißlack | Gelblack |
|---|---|---|
| | keine Erweichung | keine Erweichung |
| Abklebtest ( 1 Std. Belastung mit Klebeband) | keine Markierung | keine Markierung |

Beispiel 3

Rezeptur eines weißen Decklacks

| | |
|---|---|
| Acrylatharz II | 36,8 Teile |
| Hexakis-(methoximethyl)-melamin | 7,3 Teile |
| Tönpaste weiß P3 | 29,4 Teile |
| Butylacetat | 7,6 Teile |
| Butanol | 15,0 Teile |
| handelsübliches Siliconöl (5 %ig) | 1,0 Teile |
| p-Toluolsulfonsäure (40 %ig) | 2,9 Teile |

Einstellverdünnung : Methoxipropylacetat (18 sec. DIN 4)

Bei forcierter Trocknung (30 min 60 °C) wird folgendes Eigenschaftsniveau erreicht (wenn nicht anders angegeben, wurden die Belastungstests 1 Std. nach Entnahme aus dem Trocknungsofen durchgeführt).

| | |
|---|---|
| Schichtstärkte | 32 µm |
| Pendelhärte 1 Std. nach Trocknung | 95 sec |
| nach 48 Std. | 111 sec |
| Beständigkeit gegen Superbenzin und Xylol (jeweils 5 min Belastungsdauer) | keine Markierung, keine Erweichung |
| Abklebetest (1 Std. Belastung mit Klebeband) | keine Markierung |

Bei Trocknung bei 20 °C (Raumtemperatur) wird folgendes Eigenschaftsniveau erreicht :

| | |
|---|---|
| Beständigkeit gegen Superbenzin und Xylol nach 3 Tagen (Belastungsdauer jeweils 5 min) | keine Markierung, keine Erweichung |
| Schwitzwasserbelastung, 260 h bei 40 °C | keine Blasen, gute Glanzhaltung |

Beispiel 4

Rezeptur eines weißen Decklackes

| | |
|---|---|
| Acrylatharz III | 39,4 Teile |
| Hexakis-(methoximethyl)-melamin | 7,4 Teile |
| Tönpaste weiß P3 | 29,4 Teile |
| Methoxypropylacetat | 3,0 Teile |
| Butanol | 15,0 Teile |
| Tetralin | 3,0 Teile |
| handelsübliches Siliconöl (5 %ig) | 1,0 Teile |
| p-Toluolsulfonsäure (40 %ig) | 1,8 Teile |

Einstellverdünnung : Methoxipropylacetat (18 sec DIN 4).

Bei forcierter Trocknung (30 min bei 60 °C) wird folgendes Eigenschaftsniveau erreicht (wenn nicht anders angegeben, wurden die Belastungstest 1 Std. nach Entnahme aus dem Trocknungsofen durchgeführt).

| | |
|---|---|
| Schichtstärke | 35 µm |
| Pendelhärte 1 Std. nach Trocknung | 91 sec |
| nach 4 Tagen | 126 sec |
| Beständigkeit gegen Superbenzin und Xylol (jeweils 5 min Belastungsdauer) | keine Markierung, keine Erweichung |

Bei Trocknung bei 20 °C (Raumtemperatur) wird folgendes Eigenschaftsniveau erreicht :

| | |
|---|---|
| Schichtstärke | 33 µm |
| Pendelhärte nach 48 h | 81 sec |
| nach 24 Std. : Beständigkeit gegen Superbenzin | keine Markierung, keine Erweichung |
| Beständigkeit gegen Xylol (Belastung jeweils 5 min) | leichte Markierung |
| nach 48 Beständigkeit gegen Superbenzin | keine Markierung, keine Erweichung |
| Beständigkeit gegen Xylol | keine Markierung, keine Erweichung |
| Schwitzwasserbelastung, 260 h bei 40 °C | keine Blasen, leichte Vermattung |

## Beispiel 5

Rezeptur eines weißen Decklacks

| | |
|---|---|
| Acrylatharz IV | 39,7 Teile |
| Hexakis-(methoximethyl)-melamin | 7,3 Teile |
| Tönpaste weiß P3 | 29,4 Teile |
| Butylacetat | 4,8 Teile |
| Butanol | 15,0 Teile |
| handelsübliches Siliconöl (5 %ig) | 1,0 Teile |
| p-Toluolsulfonsäure (40 %ig) | 2,8 Teile |

Einstellverdünnung : Xylol (18 sec DIN 4)

Bei forcierter Trocknung (30 min bei 60 °C) wird folgendes Eigenschaftsniveau erreicht (wenn nicht anders angegeben, wurden die Belastungstests 1 Std. nach Entnahme aus dem Trocknungsofen durchgeführt).

| | |
|---|---|
| Schichtstärke | 36 µm |
| Pendelhärte 1 Std. nach Trocknung | 70 sec |
| nach 24 Std. | 77 sec |
| Beständigkeit gegen Superbenzin und Xylol (jeweils 5 min Belastungsdauer) | keine Markierung, keine Erweichung |

## Beispiel 6

Rezeptur eines weißen Decklacks

| | |
|---|---|
| Acrylatharz | 38,6 Teile |
| Hexakis-(methoximethyl)-melamin | 7,3 Teile |
| Tönpaste weiß P3 | 29,4 Teile |
| Butylacetat | 5,9 Teile |
| Butanol | 15,0 Teile |
| handelsübliches Siliconöl (5 %ig) | 1,0 Teile |
| p-Toluolsulfonsäure (40 %ig) | 2,8 Teile |

Einstellverdünnung : Xylol (18 sec DIN 4)

Bei forcierter Trocknung (30 min bei 60 °C) wird folgendes Eigenschaftsniveau erreicht (wenn nicht anders angegeben, wurden die Belastungstests 1 Std. nach Entnahme aus dem Trocknungsofen durchgeführt).

| | |
|---|---|
| Schichtstärke | 33 µm |
| Pendelhärte 1 Std. nach Trocknung | 85 sec |
| nach 24 Std. | 98 sec |
| nach 14 Tagen | 155 sec |
| Beständigkeit gegen Superbenzin und Xylol (jeweils 5 min Belastungsdauer) | keine Markierung, keine Erweichung |

## Beispiel 7

Rezeptur eines Klarlacks

| | |
|---|---|
| Acrylatharz | 68,1 Teile |
| Hexakis-(methoximethyl)-melamin | 10,2 Teile |

| | |
|---|---|
| Xylol | 13,2 Teile |
| handelsübliches Siliconöl (5 %ig) | 1,0 Teile |
| Pyridinsalz der p-Toluolsulfonsäure (20 %ig) | 7,5 Teile |

Einstellverdünnung : Xylol (18 sec DIN 4)

Bei forcierter Trocknung (30 min bei 60 °C) wird folgendes Eigenschaftsniveau erreicht (wenn nicht anders angegeben, wurden die Belastungstests 1 Std. nach Entnahme aus dem Trocknungsofen durchgeführt).

| | Klarlack |
|---|---|
| Schichtstärke | 32 µm |
| Pendelhärte 1 Std. nach Trocknung | 95 sec |
| nach 48 Std. | 111 sec |
| Beständigkeit gegen Superbenzin und Xylol (jeweils 5 min Belastungsdauer) | keine Markierung, keine Erweichung |
| Abklebetest (1 Std. Belastung mit Klebeband) | keine Markierung |

Beispiel 8

Rezeptur eines weißen Decklacks

| | |
|---|---|
| Acrylatharz VII | 42,0 Teile |
| Hexakis-(methoximethyl)-melamin | 7,7 Teile |
| Tönpaste weiß P3 | 30,8 Teile |
| Butanol | 15,6 Teile |
| handelsübliches Siliconöl (5 %ig) | 1,0 Teile |
| p-Toluolsulfonsäure (40 %ig) | 2,9 Teile |

Einstellverdünnung : Xylol (18 sec DIN 4)

Bei forcierter Trocknung (30 min bei 60 °C) wird folgendes Eigenschaftsniveau erreicht (wenn nicht anders angegeben, wurden die Belastungstests 1 Std. nach Entnahme aus dem Trockenofen durchgeführt) :

| | |
|---|---|
| Schichtstärke | 32 µm |
| Pendelhärte 1 Std. nach Trocknung | 81 sec |
| nach 6 Tagen | 87 sec |
| Beständigkeit gegen Superbenzin und Xylol (jeweils 5 min Belastungsdauer) | leichte Markierung |
| nach 48 h | keine Markierung, keine Erweichung |

Beispiel 9

Rezeptur eines roten Decklackes

| | |
|---|---|
| Acrylatharz III | 29,7 Teile |
| Polyisocyanat (75 %ig, Triisocyanat aus Trimethylolpropan mit 3 Mol Toluylendiisocyanat, in Ethylacetat) | 26,5 Teile |
| Tönpaste rot | 25,0 Teile |
| Butylacetat | 18,75 Teile |
| Ethylendiamin (10 %ig in Isopropanol) | 0,05 Teile |
| | 100,00 Teile |

Beispiel 10

Rezeptur eines grünen Decklacks

| | |
|---|---|
| Acrylatharz I | 40,9 Teile |
| Polyisocyanat (75 %ig, Triisocyanat aus Trimethylolpropan mit 3 Mol Toluylendiisocyanat, in Ethylacetat) | 18,3 Teile |
| Tönpaste grün | 31,3 Teile |
| Butylacetat | 9,4 Teile |
| Ethylendiamin (10 %ig in Isopropanol) | 0,1 Teile |
| | 100,0 Teile |

Bei forcierter Trocknung (30 min bei 60 °C) wird folgendes Eigenschaftsniveau erzielt :

| | Beispiel 9 | Beispiel 10 |
|---|---|---|
| Schichtstärke | 40 µm | 42 µm |
| Pendelhärte | | |
| 6h nach Entnahme aus Trocknungsofen | 53 sec. | 63 sec. |
| 24h nach Entnahme aus Trocknungsofen | 137 sec. | 126 sec. |
| Beständigkeit gegen Superbenzin und Xylol, (jeweils 5 min Belastung, 6h nach Entnahme aus Trocknungsofen) | keine Markierung, keine Erweichung | keine Markierung, keine Erweichung |

Beispiel 11

Rezeptur eines grünen Decklacks

| | |
|---|---|
| Acrylatharz I | 45,8 Teile |
| Polyisocyanat (Triisocyanat aus 3 Mol Hexamethylendiisocyanat, trimerisiert, 90 %ig in Butylacetat/Solventnaphtha 1 : 1) | 13,4 Teile |
| Tönpaste grün | 31,2 Teile |
| Butylacetat | 9,52 Teile |
| Ethylendiamin (10 %ig in Isopropanol) | 0,08 Teile |
| | 100,00 Teile |

Bei forcierter Trocknung (20 min bei 120 °C) wird folgendes Eigenschaftsniveau erreicht :

| | |
|---|---|
| Schichtstärke | 40 µm |
| Pendelhärte | |
| 6 h nach Entnahme aus Trocknungsofen | 90 sec |
| 24 h nach Entnahme aus Trocknungsofen | 125 sec |
| Beständigkeit gegen Superbenzin (5 min Belastung, 6 h nach Entnahme aus Trocknungsofen) | keine Markierung, keine Erweichung |
| Beständigkeit gegen Xylol, jeweils 5 min Belastung | |
| 6 h nach Entnahme aus Trocknungsofen | sehr leichte Markierung, sehr leichte Erweichung |
| 24 h nach Entnahme aus Trocknungsofen | keine Markierung, keine Erweichung |

Topfzeit im DIN 4 Auslaufbecher, Anstieg von 20 sec. auf 52 sec. in 24 h.

Die Acrylatharze I und III werden mittels der Photonenkorrelationsspektroskopie auf einen Gehalt an Mikrogel-Teilchen untersucht. Ergebnis der Untersuchung ist, daß es keinen analytischen Hinweis auf einen Gehalt an Mikrogelen gibt. Die Harzlösungen wurden mit dem Coulter® Model N 4 sub-micron partical analyzer der Fa. Curtin Matheson Scientific Inc., Detroit, Michigan, USA, untersucht.

**Patentansprüche**

1. Hydroxylgruppenhaltiges vorvernetztes Acrylatcopolymerisat, entstanden durch Copolymerisation von Acrylaten mit mindestens zwei olefinisch ungesättigten Doppelbindungen, hydroxylgruppenhaltigen Monomeren und weiteren olefinisch ungesättigten Monomeren, dadurch gekennzeichnet, daß zu seiner Herstellung

$a_1$) 10 bis 60 Gew.-% hydroxylgruppenhaltige Ester der Acrylsäure und/oder Methacrylsäure mit 2 bis 14 Kohlenstoffatomen im Alkylrest,

$a_2$) 5 bis 25 Gew.-% Monomere mit mindestens 2 polymerisierbaren, olefinisch ungesättigten Doppelbindungen und

$a_3$) 15 bis 82 Gew.-% weitere polymerisierbare Monomere mit einer olefinisch ungesättigten Doppelbindung,

wobei die Summe der Komponenten $a_1$), $a_2$) und $a_3$) 100 Gew.-% beträgt, in einem organischen Lösungsmittel bei 80 bis 130 °C unter Verwendung von mindestens 0,5 Gew.-%, bezogen auf das Gesamtgewicht der Monomeren, eines Polymerisationsreglers und unter Verwendung von Polymerisationsinitiatoren copolymerisiert werden und die Polymerisation zur Herstellung des Acrylatcopolymerisats so durchgeführt wird, daß eine klare transparente nicht gelierte Lösung des Polymerisats mit einem Festkörpergehalt von 40 bis 65 Gew-% resultiert.

2. Acrylatcopolymerisat nach Anspruch 1, dadurch gekennzeichnet, daß es erhalten worden ist durch Copolymerisation von 15 bis 60 Gew.-% der Komponente $a_1$) und 5 bis 20 Gew.-% der Komponente $a_2$), wobei die Summe der Komponenten $a_1$), $a_2$) und $a_3$) 100 Gew.-% beträgt.

3. Acrylatcopolymerisat nach Anspruch 1 oder 2, dadurch gekennzeichnet, daß die Komponente $a_2$) der allgemeinen Formel

$$CH_2 = \overset{R}{\overset{|}{C}} - \overset{O}{\overset{\|}{C}} - X - (CH_2)_n - X - \overset{O}{\overset{\|}{C}} - \overset{R}{\overset{|}{C}} = CH_2$$

entspricht, in der bedeuten :

R = H oder $CH_3$,
X = O, N, S
n = 2 bis 8.

4. Acrylatcopolymerisat nach Anspruch 1, dadurch gekennzeichnet, daß die Komponente $a_2$) ein Umsetzungsprodukt aus einer Carbonsäure mit einer polymerisierbaren, olefinisch ungesättigten Doppelbindung und Glycidylacrylat und/oder Glycidylmethacrylat ist.

5. Acrylatcopolymerisat nach Anspruch 1, dadurch gekennzeichnet, daß die Komponente $a_2$) eine mit einem ungesättigten, eine polymerisierbare Doppelbindung enthaltenden Alkohol veresterte Polycarbonsäure oder ungesättigte Monocarbonsäure ist.

6. Acrylatcopolymerisat nach Anspruch 1, dadurch gekennzeichnet, daß die Komponente $a_2$) durch Umsetzung eines Polyisocyanats mit ungesättigten, polymerisierbare Doppelbindungen enthaltenden Alkoholen oder Aminen herstellbar ist.

7. Acrylatcopolymerisat nach Anspruch 1, dadurch gekennzeichnet, daß die Komponente $a_2$) ein Diester von Polyethylenglykol und/oder Polypropylenglykol mit einem mittleren Molekulargewicht von weniger als 1 500 und Acrylsäure und/oder Methacrylsäure ist.

8. Acrylatcopolymerisat nach Anspruch 1 bis 7, dadurch gekennzeichnet, daß die Komponente $a_1$) ein Hydroxyalkylester der Acrylsäure und/oder Methacrylsäure mit einer primären Hydroxylgruppe ist.

9. Acrylatcopolymerisat nach Anspruch 1 bis 8, dadurch gekennzeichnet, daß die Komponente $a_1$) zumindest teilweise ein Umsetzungsprodukt aus einem Mol Hydroxyethylacrylat und/oder Hydroxyethylmethacrylat und durchschnittlich 2 Mol ε-Caprolacton ist.

10. Acrylatcopolymerisat nach Anspruch 1 bis 9, dadurch gekennzeichnet, daß die Komponente $a_1$) in einem Anteil von bis zu 75 Gewichts-%, bezogen auf die Gesamtmenge $a_1$), ein hydroxylgruppenhaltiger Ester der Acrylsäure und/oder Methacrylsäure mit einer sekundären Hydroxylgruppe ist.

11. Acrylatcopolymerisat nach Anspruch 10, dadurch gekennzeichnet, daß der hydroxylgruppenhaltige Ester ein Umsetzungsprodukt aus Acrylsäure und/oder Methacrylsäure und dem Glycidylester einer Carbonsäure mit einem tertiären α-Kohlenstoffatom ist.

12. Acrylatcopolymerisat nach Anspruch 1 bis 11, dadurch gekennzeichnet, daß die weiteren polymerisierbaren Monomeren der Komponente $a_3$) ausgewählt sind aus der Gruppe Styrol, Vinyltoluol, Acrylsäure, Methacrylsäure, Alkylester der Acrylsäure und Methacrylsäure, Alkoxyethylacrylate und Aryloxyethylacrylate und die entsprechenden Methacrylate, Ester der Malein- und Fumarsäure.

13. Verfahren zur Herstellung eines Acrylatcopolymerisats nach den Ansprüchen 1 bis 12, dadurch gekennzeichnet, daß zu seiner Herstellung die Komponenten $a_1$), $a_2$) und $a_3$) in einem organischen Lösungsmittel bei 80 bis 130 °C unter Verwendung von mindestens 0,5 Gew.-%, bezogen auf das Gesamtgewicht der Monomeren, eines Polymerisationsreglers und unter Verwendung von Polymerisationsinitiatoren zu einem vorvernetzten, nicht gelierten Produkt copolymerisiert werden und die Polymerisation zur Herstellung des Acrylatcopolymerisats so durchgeführt wird, daß eine klare transparente nicht gelierte Lösung des Polymerisats mit einem Festkörpergehalt von 40 bis 65 Gew.-% resultiert.

14. Verfahren nach Anspruch 13, dadurch gekennzeichnet, daß als Polymerisationsregler Mercaptogruppen enthaltende Verbindungen, vorzugsweise Mercaptoethanol, verwendet werden.

15. Verfahren nach Anspruch 13 bis 14, dadurch gekennzeichnet, daß als Initiatoren Peroxiester und/oder Azoverbindungen verwendet werden.

16. Organische Lösungsmittel, gegebenenfalls Pigmente, Füllstoffe und übliche Hilfsstoffe und Additive enthaltendes sowie gegebenenfalls durch einen Katalysator härtbares Überzugsmittel, enthaltend als Bindemittel das Acrylatcopolymerisat nach einem oder nach mehreren der Ansprüche 1 bis 12 und ein zur Vernetzung desselben geeignetes Mittel.

17. Überzugsmittel nach Anspruch 16, dadurch gekennzeichnet, daß es durch Säure härtbar ist und als Bindemittel

A) 55 bis 90 Gew.-% des Acrylatcopolymerisats und

B) 10 bis 45 Gew.-% eines Melaminformaldehydharzes mit einem mittleren Molekulargewicht von 250 bis 1 000 und einem Methylolierungsgrad von mindestens 0,65, das mit Monoalkoholen mit 1 bis 4 Kohlenstoffatomen und/oder Monoethern von Diolen mit insgesamt 2 bis 7 Kohlenstoffatomen in einem Umfang von mindestens 80 Mol-%, bezogen auf die maximal mögliche Veretherung, verethert ist, enthält, wobei die Summe der Bindemittel A) und B) 100 Gew.-% beträgt.

18. Überzugsmittel nach Anspruch 17, dadurch gekennzeichnet, daß das Acrylatcopolymerisat A aus 25 bis 40 Gew.-% der Komponente $a_1$), wobei die Summe der Komponenten $a_1$), $a_2$) und $a_3$) 100 Gew.-% beträgt, hergestellt worden ist.

19. Verfahren zur Herstellung des durch Säure härtbaren Überzugsmittels nach Anspruch 17 und 18, dadurch gekennzeichnet, daß das Copolymerisat A) in einem Anteil von 55 bis 90 Gew.-%, mit 10 bis 45 Gew.-% der Komponente B) sowie mit organischen Lösungsmitteln, gegebenenfalls Pigmenten und üblichen Hilfsstoffen und Additiven durch Mischen und gegebenenfalls Dispergieren zu einer Überzugsmasse verarbeitet wird, wobei die Summe der Bindemittel A) und B) 100 Gew.-% beträgt.

20. Überzugsmittel nach Anspruch 16, dadurch gekennzeichnet, daß es als Bindemittel das Acrylatcopolymerisat A) und B) ein oder mehrere verschiedene polyfunktionelle Isocyanate enthält mit der Maßgabe, daß das Verhältnis der Isocyanatgruppen zu den Hydroxylgruppen im Bereich von 0,3 : 1 bis 3,5 : 1 liegt.

21. Überzugsmittel nach Anspruch 20, dadurch gekennzeichnet, daß das Acrylatcopolymerisat A aus 15 bis 40 Gew.-% der Komponente $a_1$), wobei die Summe der Komponenten $a_1$), $a_2$) und $a_3$) 100 Gew.-% beträgt, hergestellt worden ist.

22. Verfahren zur Herstellung des Überzugsmittels nach Anspruch 20 und 21, dadurch gekennzeichnet, daß das Acrylatcopolymerisat A) mit der Komponente B) sowie mit organischen Lösungsmitteln, gegebenenfalls Pigmenten und üblichen Hilfsstoffen und Additiven durch Mischen und gegebenenfalls durch Dispergieren zu einer Überzugsmasse verarbeitet wird mit der Maßgabe, daß das Verhältnis der Isocyanatgruppen zu den Hydroxylgruppen im Bereich von 0,3 : 1 bis 3,5 : 1 liegt.

23. Verfahren nach Anspruch 22, dadurch gekennzeichnet, daß ein oder mehrere Katalysatoren in einer Menge von 0,01 bis 1 Gew.-%, bezogen auf den Festkörpergehalt der reagierenden Komponenten, verwendet werden.

24. Verfahren nach Anspruch 23, dadurch gekennzeichnet, daß als Katalysatoren Amine verwendet werden.

25. Verfahren zur Herstellung eines Überzugs, bei dem einem Überzugsmittel nach Anspruch 17 oder 18 ein Säurekatalysator in einer Menge von 1 bis 5 Gew.-%, bezogen auf den Bindemittelfestkörpergehalt an A) und B) zugemischt wird, die erhaltene Mischung durch Spritzen, Fluten, Tauchen, Walzen, Rakeln oder Streichen auf ein Substrat in Form eines Films aufgebracht wird und der Film bei Temperaturen von 20 bis 80 °C zu einem fest haftenden Überzug gehärtet wird.

26. Verfahren zur Herstellung eines Überzugs, bei dem ein Überzugsmittel nach Anspruch 20 oder 21, wobei dem Überzugsmittel gegebenenfalls ein Katalysator zugemischt werden kann, durch Spritzen, Fluten, Tauchen, Walzen, Rakeln oder Streichen auf ein Substrat in Form eines Films aufgebracht wird und der Film zu einem fest haftenden Überzug gehärtet wird.

## Claims

1. Hydroxylic pre-crosslinked acrylate copolymer, produced by copolymerization of acrylates having at least two olefinically unsaturated double bonds, hydroxylic monomers and further olefinically unsaturated monomers, characterized in that

$a_1$) 10 to 60 % by weight of hydroxylic esters of acrylic acid and/or methacrylic acid, having 2 to 14 carbon atoms in the alkyl radical,

$a_2$) 5 to 25 % by weight of monomers having at least two polymerizable olefinically unsaturated double bonds and

$a_3$) 15 to 82 % by weight of further polymerizable monomers having one olefinically unsaturated double bond,

the sum of components $a_1$), $a_2$) and $a_3$) being 100 % by weight, are copolymerized in an organic solvent at 80 to 130 °C with the use of at least 0.5 % by weight, based on the total weight of monomers, of a polymerization regulator and with the use of polymerization initiators, the polymerization for the preparation of the acrylate copolymer being carried out such that a clear, transparent, nongelled solution of the polymer having a solids content of 40 to 65 % by weight results.

2. Acrylate copolymer according to Claim 1, characterized in that it has been obtained by copolymerization of 15 to 60 % by weight of component $a_1$) and 5 to 20 % by weight of component $a_2$), the sum of components $a_1$), $a_2$) and $a_3$) being 100 % by weight.

3. Acrylate copolymer according to Claim 1 or 2, characterized in that the component $a_2$) is of the general formula

$$CH_2 = \overset{R}{\overset{|}{C}} - \overset{O}{\overset{\|}{C}} - X - (CH_2)_n - X - \overset{O}{\overset{\|}{C}} - \overset{R}{\overset{|}{C}} = CH_2$$

where

R = H or $CH_3$,
X = O, N or S
n = 2 to 8.

4. Acrylate copolymer according to Claim 1, characterized in that the component $a_2$) is a reaction product of a carboxylic acid having a polymerizable olefinically unsaturated double bond and is glycidyl acrylate and/or glycidyl methacrylate.

5. Acrylate copolymer according to Claim 1, characterized in that the component $a_2$) is a polycarboxylic acid or unsaturated monocarboxylic acid esterified with an unsaturated alcohol containing a polymerizable double bond.

6. Acrylate copolymer according to Claim 1, characterized in that the component $a_2$) can be prepared by reacting a polyisocyanate with unsaturated alcohols or amines containing polymerizable double bonds.

7. Acrylate copolymer according to Claim 1, characterized in that the component $a_2$) is a diester of polyethylene glycol and/or polypropylene glycol of a mean molecular weight of less than 1 500, and acrylic acid and/or methacrylic acid.

8. Acrylate copolymer according to Claims 1 to 7, characterized in that the component $a_1$) is a hydroxyalkyl ester of acrylic acid and/or methacrylic acid, having a primary hydroxyl group.

9. Acrylate copolymer according to Claims 1 to 8, characterized in that the component $a_1$) is at least partially a reaction product of one mol of hydroxyethyl acrylate and/or hydroxyethyl methacrylate and, on average, 2 mol of ε-caprolactone.

10. Acrylate copolymer according to Claims 1 to 9, characterized in that a proportion of up to 75 % by weight, of component $a_1$), based on the total quantity of $a_1$), is a hydroxylic acrylic and/or methacrylic acid ester with a secondary hydroxyl group.

11. Acrylate copolymer according to Claim 10, characterized in that the hydroxylic ester is a reaction product of acrylic acid and/or methacrylic acid and the glycidyl ester of a carboxylic acid having a tertiary α-carbon atom.

12. Acrylate copolymer according to Claims 1 to 11, characterized in that the further polymerizable monomers of component $a_3$) are selected from the group comprising styrene, vinyltoluene, acrylic acid, methacrylic acid, alkyl esters of acrylic acid and methacrylic acid, alkoxyethyl acrylates and aryloxyethyl acrylates and the corresponding methacrylates, and esters of maleic and fumaric acids.

13. A process for the preparation of an acrylate copolymer according to Claims 1 to 12, characterized in that for its preparation, components $a_1$), $a_2$) and $a_3$) are copolymerized in an organic solvent at 80 to 130 °C with the use of at least 0.5 % by weight, based on the total weight of monomers, of a polymerization regulator and with the use of polymerization initiators, to give a pre-crosslinked, non-gelled product and in that the polymerization for the preparation of the acrylate copolymer is carried out in a manner such that a clear transparent non-gelled solution of the polymer having a solids content of 40 to 65 % by weight results.

14. Process according to Claim 13, characterized in that compounds containing mercapto groups, preferably mercaptoethanol, are used as the polymerization regulator.

15. Process according to Claims 13 to 14, characterized in that peroxy esters and/or azo compounds are used as the initiators.

16. Coating agent which contains organic solvents, if appropriate pigments, fillers and conventional assistants and additives and, if appropriate, is curable by means of a catalyst and which, as the binder, contains the acrylate copolymer according to one or more of Claims 1 to 12 and an agent suitable for croslinking the former.

17. Coating agent according to Claim 16, characterized in that it is curable by means of acid and contains, as the binder,

A) 55 to 90 % by weight, of the acrylate copolymer and

B) 10 to 45 % by weight, of a melamine/formaldehyde resin of a mean molecular weight from 250 to 1 000 and a degree of methylolation of at least 0.65, which resin is esterified with monoalcohols having 1 to 4 carbon atoms and/or monoethers of diols having 2 to 7 carbon atoms in total, to an extent of at least 80 mol%, based on the maximum possible esterification,

the sum of the binders A) and B) being 100 % by weight.

18. Coating agent according to Claim 17, characterized in that the acrylate copolymer A has been prepared from 25 to 40 % by weight of component $a_1$), the sum of components $a_1$), $a_2$) and $a_3$) being 100 % by weight.

19. A process for the preparation of the acid-curable coating agent according to Claims 17 and 18, characterized in that a proportion of 55 to 90 % by weight of the copolymer A) is processed with 10 to 45 % by weight of component B) and with organic solvents, where appropriate pigments and conventionnal

assistants and additives, by mixing and, where appropriate, dispersing, to give a coating, the sum of binders A) and B) being 100 % by weight.

20. Coating agent according to Claim 16, characterized in that it contains, as the binder, the acrylate copolymer A) and B) one or more different polyfunctional isocyanates, with the proviso that the ratio of the isocyanate groups and hydroxyl groups is within the range from 0.3 : 1 to 3.5 : 1.

21. Coating agent according to Claim 20, characterized in that the acrylate copolymer has been prepared from 15 to 40 % by weight of component $a_1$), the sum of components $a_1$), $a_2$) and $a_3$) being 100 % by weight.

22. Process for the preparation of the coating agent according to Claims 20 and 21, characterized in that the acrylate copolymer A) is processed with component B) and with organic solvents, where appropriate pigments and conventional assistants and additives by mixing and, where appropriate, dispersing, to give a coating, with the proviso that the ratio between isocyanate groups and hydroxyl groups is within the range from 0.3 : 1 to 3.5 : 1.

23. Process according to Claim 22, characterized in that one or more catalysts are used in a quantity of 0.01 to 1 % by weight, based on the solids content of the reacting components.

24. Process according to Claim 23, characterized in that amines are used as the catalysts.

25. Process for the preparation of a coating, wherein an acid catalyst in a quantity of 1 to 5 % by weight, based on the solids content of binders A) and B), is admixed to a coating agent according to Claim 17 or 18, the mixture obtained is applied in the form of a film to a substrate by spraying, flooding, dipping, rolling, knife application of brushing and the film is cured at temperatures of 20 to 80 °C to give a firmly adhering coating.

26. Process for the preparation of a coating, wherein a coating agent according to Claim 20 or 21, to which a catalyst may be admixed if appropriate, is applied in the form of a film to a substrate by spraying, flooding, dipping, rolling, knife application or brushing and the film is cured to give a firmly adhering coating.

**Revendications**

1. Copolymère acrylique pré-réticulé, renfermant des groupes hydroxyle, formé par copolymérisation d'acrylates présentant au moins deux doubles liaisons d'insaturation oléfinique, de monomères renfermant des groupes hydroxyle et d'autres monomères à insaturation oléfinique, caractérisé par le fait que, pour sa fabrication,

$a_1$) 10 à 60 % en poids d'ester à teneur en hydroxyle de l'acide acrylique et/ou de l'acide méthacrylique présentant 2 à 14 atomes de carbone dans le reste alkyle,

$a_2$) 5 à 25 % en poids de monomère présentant au moins 2 doubles liaisons d'insaturation oléfinique, polymérisables, et

$a_3$) 15 à 82 % en poids d'autre monomère polymérisable présentant une double liaison d'insaturation oléfinique,

la somme des composants $a_1$), $a_2$) et $a_3$) s'élevant à 100 % en poids, sont copolymérisés dans un solvant organique, à une température allant de 80 à 130 °C, avec utilisation d'au moins 0,5 % en poids, par rapport au poids total des monomères, d'un régulateur de polymérisation, et avec utilisation d'initiateurs de polymérisation, et la polymérisation en vue de la fabrication du copolymère acrylique est réalisée de telle sorte qu'il en résulte une solution transparente, claire, non gélifiée, du polymère, présentant une teneur en corps solides allant de 40 à 65 % en poids.

2. Copolymère acrylique selon la revendication 1, caractérisé par le fait qu'il a été obtenu par copolymérisation de 15 à 60 % en poids du composant $a_1$) et de 5 à 20 % en poids du composant $a_2$), la somme des composants $a_1$), $a_2$) et $a_3$) s'élevant à 100 % en poids.

3. Copolymère acrylique selon la revendication 1 ou 2, caractérisé par le fait que le composant $a_2$) correspond à la formule générale :

$$CH_2 = \overset{R}{\overset{|}{C}} - \overset{O}{\overset{\|}{C}} - X - (CH_2)_n - X - \overset{O}{\overset{\|}{C}} - \overset{R}{\overset{|}{C}} = CH_2$$

dans laquelle :

R = H ou $CH_3$,
X = O, N, S,
n = 2 à 8.

4. Copolymère acrylique selon la revendication 1, caractérisé par le fait que le composant $a_2$) est un produit de réaction d'un acide carboxylique présentant une double liaison d'insaturation oléfinique, polymérisable, et d'acrylate de glycidyle et/ou de méthacrylate de glycidyle.

5. Copolymère acrylique selon la revendication 1, caractérisé par le fait que le composant $a_2$) est un acide polycarboxylique ou un acide monocarboxylique insaturé, estérifiés avec un alcool insaturé, renfermant une double liaison polymérisable.

6. Copolymère acrylique selon la revendication 1, caractérisé par le fait que le composant $a_2$) peut être fabriqué par réaction d'un polyisocyanate avec des alcools ou amines insaturés, renfermant des doubles liaisons polymérisables.

7. Copolymère acrylique selon la revendication 1, caractérisé par le fait que le composant $a_2$) est un diester de polyéthylèneglycol et/ou de polypropylèneglycol présentant une masse moléculaire moyenne de moins de 1 500, et d'acide acrylique et/ou d'acide méthacrylique.

8. Copolymère acrylique selon l'une des revendications 1 à 7, caractérisé par le fait que le composant $a_1$) est un ester hydroxyalkylique de l'acide acrylique et/ou de l'acide méthacrylique présentant un groupe hydroxyle primaire.

9. Copolymère acrylique selon l'une des revendications 1 à 8, caractérisé par le fait que le composant $a_1$) est au moins en partie un produit de réaction d'une mode d'acrylate d'hydroxyéthyle et/ou de méthacrylate d'hydroxyéthyle et en moyenne 2 moles d'$\varepsilon$-caprolactone.

10. Copolymère acrylique selon l'une des revendications 1 à 9, caractérisé par le fait que le composant $a_1$), dans une fraction allant jusqu'à 75 % en poids par rapport à la quantité totale de $a_1$), est un ester à teneur en hydroxyle de l'acide acrylique et/ou de l'acide méthacrylique présentant un groupe hydroxyle secondaire.

11. Copolymère acrylique selon la revendication 10, caractérisé par le fait que l'ester à teneur en hydroxyle est un produit de réaction d'acide acrylique et/ou d'acide méthacrylique et de l'ester glycidylique d'un acide carboxylique présentant un atome de carbone en $\alpha$ tertiaire.

12. Copolymère acrylique selon l'une des revendications 1 à 11, caractérisé par le fait que les autres monomètres polymérisables du composant $a_3$) sont choisis parmi le styrène, le vinyltoluène, l'acide acrylique, l'acide méthacrylique, les esters alkyliques de l'acide acrylique et de l'acide méthacrylique, les acrylates d'alcoxyéthyle et les acrylates d'aryloxyéthyle et les méthacrylates correspondants, les esters de l'acide maléique et de l'acide fumarique.

13. Procédé de fabrication d'un copolymère acrylique tel que défini à l'une des revendications 1 à 12, caractérisé par le fait que, pour sa fabrication, les composants $a_1$), $a_2$) et $a_3$) sont copolymérisés dans un solvant organique, à une température de 80 à 130 °C, avec utilisation d'au moins 0,5 % en poids par rapport au poids total des monomères, d'un régulateur de polymérisation et avec utilisation d'initiateurs de polymérisation, pour donner un produit pré-réticulé, non gélifié, et que la polymérisation en vue de la fabrication du copolymère acrylique est réalisée de telle sorte qu'il en résulte une solution transparente, claire, non gélifiée, du polymère, présentant une teneur en corps solides allant de 40 à 65 % en poids.

14. Procédé selon la revendication 13, caractérisé par le fait que l'on utilise, comme régulateur de polymérisation, des composés à teneur en mercapto, de préférence, le mercaptoéthanol.

15. Procédé selon l'une des revendications 13 et 14, caractérisé par le fait que l'on utilise, comme initiateurs, des peroxyesters et/ou des composés azoïques.

16. Agent de revêtement renfermant des solvants organiques, éventuellement des pigments, des charges et des adjuvants et additifs usuels, de même qu'étant éventuellement durcissable par un catalyseur, renfermant, comme liant, le copolymère acrylique tel que défini à l'une ou plusieurs des revendications 1 à 12 et un agent approprié pour sa réticulation.

17. Agent de revêtement selon la revendication 16, caractérisé par le fait qu'il est durcissable par un acide et qu'il renferme, comme liant,

A) 55 à 90 % en poids du copolymère acrylique, et

B) 10 à 45 % en poids d'une résine mélamine-formaldéhyde présentant une masse moléculaire moyenne allant de 250 à 1 000 et un degré de méthylolation d'au moins 0,65, qui est éthérifiée avec des monoalcools possédant 1 à 4 atomes de carbone et/ou des monoéthers de diols avec au total 2 à 7 atomes de carbone dans une proportion d'au moins 80 % en moles, par rapport à l'éthérification maximale possible,

la somme des liants A) et B) s'élevant à 100 % en poids.

18. Agent de revêtement selon la revendication 17, caractérisé par le fait que le copolymère acrylique A) a été fabriqué à partir de 25 à 40 % en poids du composant $a_1$), la somme des composants $a_1$), $a_2$) et $a_3$) s'élevant à 100 %.

19. Procédé de fabrication de l'agent de revêtement durcissable par un acide tel que défini à l'une des revendications 17 et 18, caractérisé par le fait que le copolymère A) est traité pour donner une masse de revêtement, dans une fraction de 55 à 90 % en poids, avec 10 à 45 % en poids du composant B) de même qu'avec des solvants organiques, éventuellement des pigments et des adjuvants et additifs usuels, par mélange et éventuellement dispersion, la somme des liants A) et B) s'élevant à 100 % en poids.

20. Agent de revêtement selon la revendication 16, caractérisé par le fait qu'il renferme, comme liant, le copolymère A) et B) un ou plusieurs isocyanates polyfonctionnels différents, dans la mesure où le rapport des groupes isocyanate aux groupes hydroxyle se situe dans la plage allant de 0,3 : 1 à 3,5 : 1.

21. Agent de revêtement selon la revendication 20, caractérisé par le fait que le copolymère acrylique A) a été fabriqué à partir de 15 à 40 % en poids du composant $a_1$), la somme des composants $a_1$), $a_2$) et $a_3$) s'élevant à 100 % en poids.

22. Procédé de fabrication de l'agent de revêtement tel que défini à l'une des revendications 20 et 21, caractérisé par le fait que le copolymère acrylique A) est traité pour donner une masse de revêtement, avec le composant B) de même qu'avec des solvants organiques, éventuellement des pigments et des

adjuvants et additifs usuels, par mélange et éventuellement par dispersion, avec la condition que le rapport des groupes isocyanate aux groupes hydroxyle se situe dans la plage allant de 0,3 : 1 à 3,5 : 1.

23. Procédé selon la revendication 22, caractérisé par le fait qu'on utilise un ou plusieurs catalyseurs dans une quantité allant de 0,01 à 1 % en poids, par rapport à la teneur en corps solides des composants réactifs.

24. Procédé selon la revendication 23, caractérisé par le fait que l'on utilise des amines comme catalyseurs.

25. Procédé de fabrication d'un revêtement, dans lequel on incorpore un agent de revêtement tel que défini à l'une des revendications 17 ou 18, un catalyseur acide en une quantité allant de 1 à 5 % en poids par rapport à la teneur en corps solides du liant en A) et B), on applique le mélange obtenu par pulvérisation, coulée, immersion, application au rouleau, raclage ou enduction, sur un substrat, afin de former un film, et on fait durcir le film à des températures allant de 20 à 80 °C pour donner un revêtement adhérant solidement.

26. Procédé de fabrication d'un revêtement, suivant lequel on applique un agent de revêtement tel que défini à l'une des revendications 20 ou 21, un catalyseur ayant été incorporé éventuellement à l'agent de revêtement, par pulvérisation, coulée, immersion, application au rouleau, raclage ou enduction sur un substrat, afin de former un film, et on fait durcir le film pour donner un revêtement adhérant solidement.